# EUROPÄISCHE PATENTSCHRIFT

(11) **EP 0 628 734 B1**
(45) Veröffentlichungstag und Bekanntmachung des Hinweises auf die Patenterteilung: **17.02.1999**
(21) Anmeldenummer: 94108904.7
(22) Anmeldetag: 10.06.1994
(51) Int. Cl.: F16B 7/02, E04B 1/58

(54) **Befestigungselement zum lösbaren Verbinden eines Mehrkantrohres, vorzugsweise eines Vierkantrohres**
Fastening device for removably connecting a polygonal tube, particularly a tube with a rectangular profile
Dispositif de fixation pour relier de manière amovible un tube polygonal, en particulier un tube à profil rectangulaire

(30) Priorität: 10.06.1993 DE 9308677 U
(43) Veröffentlichungstag der Anmeldung: 14.12.1994
(73) Patentinhaber: HESTEX SYSTEMS B.V., 7332 BE Appeldoorn (NL)
(72) Erfinder: Offenbroich, Adrian, D-40215 Düsseldorf (DE)
(74) Vertreter: Stenger, Watzke & Ring Patentanwälte

(56) Entgegenhaltungen:
- FR-A- 1 042 218
- FR-A- 2 549 548
- FR-A- 2 562 176
- GB-A- 2 264 517

## Beschreibung

Die Erfindung betrifft ein Befestigungselement zum lösbaren Verbinden eines Mehrkantrohres, vorzugsweise eines Vierkantrohres, mit einem in das Ende des Mehrkantrohres einführbaren Grundkörper, an dem Spreizelemente angeordnet sind, die sich durch Betätigung von außen durch axiale Verschiebung relativ zum Grundkörper gegen Innenflächen des Mehrkantrohres spreizen lassen, um Grundkörper und Mehrkantrohr kraftschlüssig miteinander zu verbinden.

Derartige Befestigungselemente finden insbesondere zur Erstellung instationärer Einbauten, wie z.B. Messeständen, Anwendung. Hierbei werden Rohre in standardisierter Bauweise verwendet, die mittels geeigneter Befestigungselemente mit anderen Rohren oder Stützelementen verbindbar sind. Auf diese Weise lassen sich aus einzelnen Modulen aufgebaute Konstruktionen verwirklichen, deren Größe und Aufbau jederzeit geändert, und so den jeweiligen Anforderungen angepaßt werden kann.

Derartige gattungsgemäße Befestigungselemente sind aus der DE-OS 21 30 639 bekannt. Bügelartig ausgestaltete Spreizelemente werden durch eine axiale relative Bewegung zum Grundkörper hin aufgespreizt und mit ihren Spitzen in kraftschlüssige Verbindung mit den Innenwandungen der Hohlprofile gebracht. Aufgrund der auftretenden Kräfte kann es sehr leicht zu Ausbeulungen der Innenwandungen kommen.

Eine andere Gattung von Befestigungselementen ist in der DE-AS 32 49 169 beschrieben, welche den Befestigungselementen der gattungsgemäßen Art aufgrund der Möglichkeit der axialen Relativbewegung zwischen Grundkörper und Spreizelement nur beschränkte Haltekräfte zuschreibt. Aus diesem Grunde offenbart die DE-AS 21 49 169 ausschließlich radial bewegliche Druckstücke. Diese Befestigungselemente werden in Rohrstutzen eines Innenrohres angeordnet, in welchem Schlitze ausgebildet sind. Die ausschließlich radial beweglichen Druckstücke durchgreifen diese Schlitze und lehnen sich dabei an deren Stirnkanten an. Gleichzeitig wird auf das über das Innenrohr geschobene Außenrohr ein radialer Druck ausgeübt, wodurch die Verbindung hergestellt wird.

Eine weitere Vergrößerung der Haltekräfte derartiger ausschließlich radial beweglicher Druckstücke offenbart die DE-PS 42 34 524, welche zur Haltekrafterhöhung eine sägezahnartige Ausbildung der äußeren Oberfläche der Druckstücke vorschlägt.

Während die ausschließlich radial beweglichen Druckstücke wie eine Art Dübelelement hohe Radialkräfte ausüben, benötigen sie einen vergleichsweise aufwendigen und vom Fertigungsaufwand her hohen Aufbau. Darüber hinaus sind sie nur für bestimmte Arten von Rohrsystemen geeignet, da der Grundkörper nahezu über die gesamte Länge von Druckstücken durchdrungen wird. Schließlich müssen die Druckstücke unabhängig voneinander bewegbar, aber dennoch relativ zum Grundkörper zusammengehalten werden, damit das Befestigungselement als Einheit gehandhabt werden kann.

Aus der FR 2 562 176 A1 ist weiterhin eine Vorrichtung zum lösbaren Verbinden von Mehrkantrohren bekannt, welche aus einem Kubus besteht, von dem sich rechtwinklig drei dehnbare Führungszapfen erstrecken, die jeweils aus vier Spreizelementen zusammengesetzt sind. Durch Anziehen eines zwischen den Spreizelementen angeordneten, konischen Schraubelementes in Richtung des Kubus werden die Spreizelemente durch das Eindringen des konischen Schraubelementes auseinander gedrückt, um eine kraftschlüssige Fixierung zu bewirken. Im Gegensatz zu den gattungsgemäßen Befestigungselementen wird die Haltekraft nicht durch eine axiale Verschiebung der Spreizkörper relativ zum Grundkörper, sondern durch Eindringen des konischen Schraubelementes hervorgerufen. Dies ist mit dem Nachteil verbunden, daß eine effektive Haltekraft erst bei hohen Spreizkräften erreicht wird, da die Spreizelemente im gespreizten Zustand sich unter einem stumpfen Winkel geneigt zur Längsachse eines Mehrkantrohres erstrecken, und demnach nicht der Herausziehbewegung des Mehrkantrohres entgegenwirken.

Bei den Befestigungselementen der gattungsgemäßen Art, bei welchen die Spreizelemente durch Betätigung von außen durch axiale Verschiebung relativ zum Grundkörper eine kraftschlüssige Verbindung zwischen Grundkörper und Mehrkantrohr herstellen, treten bei der Aufbringung entsprechend hoher Haltekräfte die genannten Ausbeulungsprobleme auf.

Der Erfindung liegt die **Aufgabe** zugrunde, ein Befestigungselement zum lösbaren Verbinden eines Mehrkantrohres und vorzugsweise eines Vierkantrohres zu schaffen, mit dem sich bei kraftschlüssiger Verbindung eine besonders hohe Haltekraft erreichen läßt.

Zur **Lösung** dieser Aufgabe wird bei einem Befestigungselement der eingangs genannten Art vorgeschlagen, daß die Zahl der Spreizelemente gleich ist der Zahl der Innenkanten des Mehrkantrohres und die Spreizelemente so an dem Grundkörper angeordnet sind, daß sie in gespreiztem Zustand ausschließlich in den jeweiligen Innenkanten des Mehrkantrohres anliegen, und daß die Spreizelemente federnd ausgebildet sind und sich unter einem spitzen Winkel geneigt zur Längsachse des Mehrkantrohres erstrecken.

Der Vorteil eines solchen Befestigungselementes liegt darin, daß sich damit eine kraftschlüssige Verbindung erreichen läßt, die sich durch eine besonders hohe Haltekraft auszeichnet. Diese hohe Haltekraft wird erreicht, indem die einzelnen Spreizelemente nicht an irgendwelchen beliebigen Innenflächen des Mehrkantrohres angreifen, sondern ausschließlich in den Innenkanten des Mehrkantrohres. Hierdurch ist ausgeschlossen, daß die Innenflächen des Mehrkantrohres sich unter der Anlagekraft der Spreizelemente nach außen wölben, und somit der Haltekraft ausweichen.

Da zudem die Zahl der Spreizelemente gleich ist der Zahl der Innenkanten des Mehrkantrohres, ist ein Verzug des Mehrkantrohes und damit die Verringerung der wirksamen Haltekraft durch Formänderungen des Mehrkantrohres ausgeschlossen. Vielmehr verteilt sich die von den Spreizelementen insgesamt aufgebrachte Spreizkraft gleichmäßig in alle Innenkanten des Mehrkantrohres, so daß dieses seine Gestalt in jedem Fall beibehält, auch unter sehr hoher Belastung durch die Spreizelemente. Mit dem vorgeschlagenen Befestigungselement lassen sich daher bereits bei geringen Spreizkräften hohe effektive Haltekräfte erreichen. Dazu trägt auch bei, daß die Spreizelemente federnd ausgebildet sind und sich unter einem spitzen Winkel geneigt zur Längsachse des Mehrkantrohres erstrecken, so daß der Anstellwinkel der Spreizelemente der Herausziehbewegung eines Mehrkantrohres entgegen gerichtet ist.

Gemäß einer bevorzugten Ausgestaltung des Befestigungselementes sind die Spreizelemente in der Weise federnd ausgebildet, so daß sie zur Erzeugung der Spreizbewegung ihren spitzen Neigungswinkel vergrößern. Auf diese Weise wird ein besonders zuverlässig arbeitendes Befestigungselement geschaffen.

Ferner wird vorgeschlagen, daß der Grundkörper unter einem spitzen Winkel zur Längsachse des Mehrkantrohres geneigte Stützflächen aufweist, an denen die Spreizelemente während des Spreizens bzw. Entspreizens entlanggleiten.

Ferner wird mit der Erfindung vorgeschlagen, daß in nicht gespreiztem Zustand der spitze Neigungswinkel der Spreizelemente geringer ist als der spitze Neigungswinkel der Stützflächen, so daß die Spreizelemente ausschließlich im Bereich der an ihren äußeren Enden ausgebildeten Spreizspitzen an den Stützflächen anliegen. Werden in diesem Fall die Spreizelemente mit einer axial in Richtung auf die Stützflächen wirkenden Kraft beauftragt, können diese im Bereich ihrer Spreizspitzen an den Stützflächen entlang nach außen gleiten, wo sie dann in einen kraftschlüssigen Kontakt mit den Innenkanten des Mehrkantrohres gelangen.

Gemäß einer bevorzugten Ausführungsform sind sämtliche Spreizelemente Bestandteile eines einstückig geformten, federnden Spreizkörpers, der über einen zentralen Bereich verfügt, an dem ein Betätigungsmittel angreift, und von dem aus sich die einzelnen Spreizelemente über stumpfwinklige Übergänge strahlenförmig nach außen erstrecken. Durch den Spreizkörper ist sichergestellt, daß die von den einzelnen Spreizelementen aufgebrachte Spreizkraft sich gleichmäßig über die einzelnen Innenkanten des Mehrkantrohres verteilt. Außerdem ist es nicht erforderlich, jedes einzelne Spreizelement mit der erforderlichen Spreizkraft zu beaufschlagen. Vielmehr reicht es aus, die Spreizkraft, beispielsweise mittels eines Zugelementes, auf den zentralen Bereich des Spreizkörpers auszuüben. Von dort verteilt sich die Kraft gleichmäßig auf die in gewissem Maße federnden Spreizelemente des Spreizkörpers.

Vorzugsweise ist der Spreizkörper als Stanzteil aus Metall ausgebildet, wobei die einzelnen Spreizelemente durch stumpfwinklige Abbiegungen dieses Stanzteils geformt sind.

Um eine gute Federwirkung der Spreizelemente bei zugleich guter Führung innerhalb des Grundkörpers zu erreichen, weisen die Spreizelemente einen bezüglich seiner Breite konstanten Abschnitt auf, an den sich V-förmig spitz auslaufende Spreizspitzen anschließen. Der Vorteil der Spreizspitzen besteht darin, daß diese sich über das Herstellen einer kraftschlüssigen Verbindung hinaus in das Material des Mehrkantrohres nach Art von Krallen einarbeiten und somit die Verbindung zusätzlich verbessern.

Gemäß einer Ausgestaltung der Erfindung erfolgt die Betätigung der Spreizelemente über ein zentral im Grundkörper angeordnetes Betätigungsmittel.

Der Anwendungsbereich des erfindungsgemäßen Befestigungselementes läßt sich wesentlich erweitern, wenn gemäß einer bevorzugten Ausgestaltung das Befestigungselement zusätzlich zu dem Grundkörper über weitere, im wesentlichen identische Grundkörper verfügt, wobei diese zur Befestigung weiterer Mehrkantrohre orthogonal zueinander an einem vorzugsweise würfelförmigen Zentralkörper angeordnet sind. Auf diese Weise lassen sich an einem einzigen Befestigungselement bis zu fünf derartiger Mehrkantrohre befestigen. Damit eignet sich das Befestigungselement insbesondere als Knotenelement bei fachwerkartig zusammensetzbaren Rohrkonstruktionen.

Der Zusammenbau derartiger Konstruktionen läßt sich wesentlich beschleunigen, wenn der Zentralkörper mit einem gemeinsamen Betätigungsorgan versehen ist, mit dem sich die Betätigungsmittel sämtlicher Grundkörper gleichzeitig betätigen lassen. Hierbei spielt es keine Rolle, ob der Zentralkörper mit zwei, drei, vier oder fünf Grundkörpern zur Aufnahme von Mehrzweckrohren versehen ist.

Weitere Vorteile und Einzelheiten des Gegenstandes der Erfindung ergeben sich aus der nachfolgenden Beschreibung eines Ausführungsbeispieles. In der zugehörigen Zeichnung zeigen:
- Fig. 1: ein Ausführungsbeispiel für ein Befestigungselement in perspektivischer Teilansicht;
- Fig. 2: in einer Schnittdarstellung ein vollständiges Befestigungselement in dreiarmiger Ausführung mit aufgesetzten Vierkantrohren;
- Fig. 3a bis 3c: ein Ausführungsbeispiel für einen Grundkörper in verschiedenen Ansichten und
- Fig. 4a bis 4c: ein Ausführungsbeispiel für einen Spreizkörper in verschiedenen Ansichten.

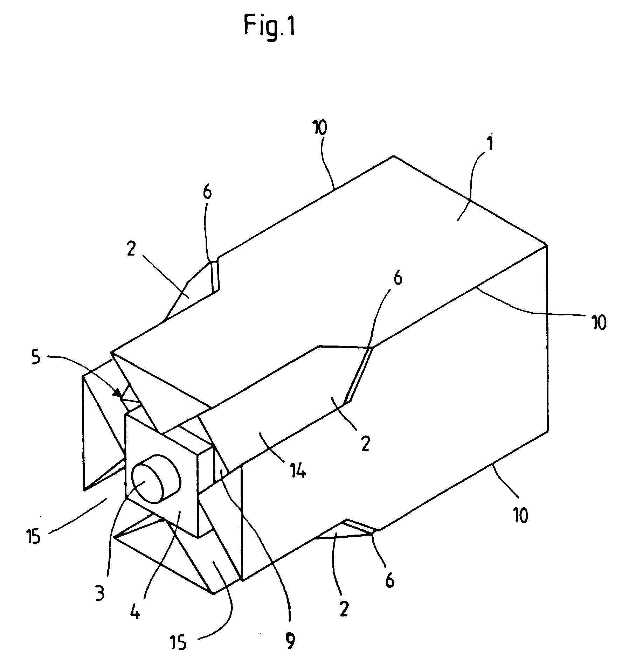

Das in Fig. 1 nur in Teildarstellung wiedergegebene Befestigungselement dient dazu, ein in Fig. 1 nicht dargestelltes Vierkantrohr aus Metall zu halten und daher mit dem Befestigungselement zu verbinden. Hierzu wird der in Fig. 1 dargestellte, blockartige Grundkörper 1 in das Ende des betreffenden Vierkantrohres eingesteckt und dann durch Aufspreizen von insgesamt vier an dem Grundkörper 1 angeordneten Spreizelementen 2 kraftschlüssig mit dem Vierkantrohr verbunden. Der Grundkörper 1 ist als blockartiger Kunststoffkörper mit quadratischem Querschnitt ausgebildet, wobei dieser Querschnitt geringfügig kleiner ist als der betreffende Innenquerschnitt des zu verbindenden Vierkantrohres. Sobald sich der Grundkörper 1 in dem Ende des Vierkantrohres befindet, wird ein zentral in dem Grundkörper 1 angeordnetes Betätigungsmittel in Gestalt einer Schraube 3 mit aufgesetzter Vierkantmutter 4 angezogen. Der hierdurch erzeugte Zug überträgt sich auf einen sternförmig gestalteten, metallischen Spreizkörper 5, an dem in Gestalt von Strahlen die einzelnen Spreizelemente 2 ausgebildet sind. Infolge der von der Vierkantmutter 4 des Betätigungsmittels übertragenen Zugkraft spreizt sich der Spreizkörper 5 auf, so daß die vier Spreizelemente 2 nach außen bewegt werden. Hierbei ist von besonderer Bedeutung, daß sich die Spreizelemente 2 ausschließlich im Bereich der insgesamt vier Kanten des Grundkörpers 1 befinden, und auch nur dort ihre Spreizwirkung entfalten. Dies führt dazu, daß das aufgesteckte Vierkantrohr im Bereich seiner vier Innenkanten von den vier Spreizelementen 2 erfaßt und kraftschlüssig festgehalten wird. Zu diesem Kraftschluß kommt noch ein gewisser Formschluß hinzu, da die Spreizelemente 2 in V-förmig gestalteten Spreizspitzen 6 auslaufen, die sich nach Art von Krallen in das Material des Vierkantrohres einarbeiten.

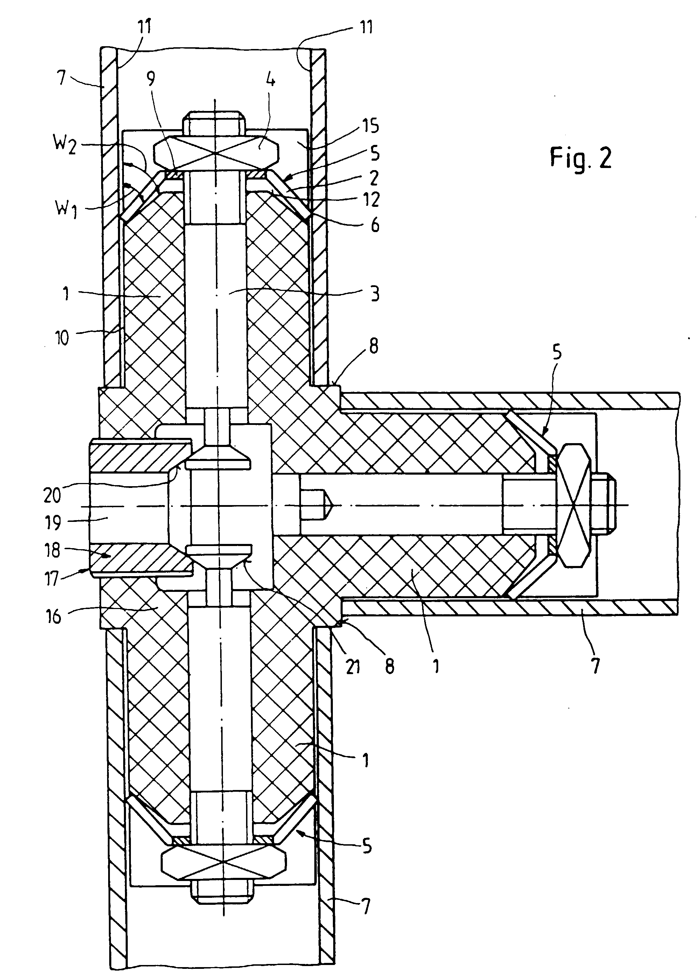

Anhand der Fig. 2 soll nun erläutert werden, wie die von dem Betätigungsmittel aufgebrachte Zugkraft zu einem Aufspreizen der Spreizelemente 2 führt: Auf den insgesamt dreifach vorhandenen Grundkörper 1 wird zunächst das zu befestigende Vierkantrohr 7 aufgesteckt, bis dieses mit seinen Stirnflächen an entsprechenden Absätzen 8 des Befestigungselementes anliegt. Das jeweilige Betätigungsmittel in Gestalt der Schraube 3 mit der Vierkantmutter 4 ist hierbei lose. In diesem Zustand ragen die Spreizspitzen 6 der Spreizkörper 5 des jeweiligen Spreizelementes 2 nicht über die Querschnittsfläche des Grundkörpers 1 hinaus, da der metallische Spreizkörper 5 als Ganzes federnd ausgebildet ist, wie dies Fig. 2 veranschaulicht. Der Spreizkörper 5 besteht zu diesem Zweck aus einem geeigneten Federstahl und weist einen flachen, zentralen Bereich 9 auf, an dem die Unterseite der Vierkantmutter 4 flächig anliegt. Von diesem zentralen Bereich 9 des Spreizkörpers 5 erstrecken sich die einzelnen Spreizelemente 2 in Richtung auf die Außenkanten 10 des Grundkörpers 1 bzw. die dort befindlichen Innenkanten 11 des Vierkantrohres 7. Hierbei wird der Übergang zwischen dem zentralen Bereich 9 und den Spreizelementen 2 jeweils durch eine stumpfwinklige Abbiegung gebildet. Gleichzeitig sind die Spreizelemente 2 unter einem spitz geformten Neigungswinkel w₁ zu den Innenkanten 11 ausgerichtet, wie dies in Fig. 2 veranschaulicht ist.

Fig. 2 zeigt ferner, daß sich jedes Spreizelement 2 auf einer zugehörigen Stützfläche 12 des Grundkörpers 1 abstützt. Auch diese Stützfläche 12 ist unter einem spitzen Neigungswinkel w₂ zu der jeweiligen Innenkante 11 des Vierkantrohres 7 geneigt. Allerdings ist der Neigungswinkel w₂ der Stützfläche 12 geringer als der Neigungswinkel w₁ des zugehörigen Spreizelementes 2, wodurch, wie Fig. 2 gut erkennen läßt, das an seiner Unterseite flach ausgebildete Spreizelement 2 ausschließlich im Bereich seiner Spreizspitze 6 an der ebenfall flach geformten Stützfläche 12 des Grundkörpers 1 anliegt. In diesem entspannten Zustand des Spreizkörpers 5 weisen die übrigen Bereiche des Spreizkörpers 5 ein deutliches Spiel gegenüber den entsprechend gestalteten Flächen des Grundkörpers 1 auf, wie Fig. 2 deutlich erkennen läßt. Wird nun die Schraube 3 mit einer Zugkraft beaufschlagt, führt dies über die Vierkantmutter 4 zu einem Druck auf den zentralen Bereich 9 des Spreizkörpers 5, so daß dieser in Richtung auf den Grundkörper 1 gezogen wird. Hierbei legen sich die Spreizelemente 2, ausgehend von den Spreizspitzen 6, zunehmend an die entsprechenden Stützflächen 12 an. Dies führt wiederum dazu, daß sich der Neigungswinkel w₁ der Spreizelemente 2 zunehmend dem vorgegebenen Neigungswinkel w₂ der Stützflächen 12 anpaßt. Da ein anderweitiges Ausweichen der Spreizelemente 2 nicht möglich ist, gleiten diese dabei entlang der Stützflächen 12 nach außen bis zur Anlage an den Innenkanten 11 des Vierkantrohres, womit der Befestigungseffekt eintritt.

Um eine sichere Führung der Spreizelemente 2 durch den Grundkörper 1 zu erreichen, verfügen diese gemäß Fig. 1 über einen bezüglich seiner Breite konstanten Abschnitt 14, an den sich die V-förmig spitz auslaufenden Spreizspitzen 6 anschließen. Der Grundkörper 1 ist mit vier auf die Außenkanten 10 ausgerichteten Aussparungen 15 versehen, in denen die konstant breiten Abschnitte 14 des Spreizelementes 2 seitlich anliegen.

In Fig. 2 ist dargestellt, daß beim Ausführungsbeispiel insgesamt drei der beschriebenen Grundkörper 1 vorhanden sind. Diese sind einstückig über einen gemeinsamen Zentralkörper 16 verbunden. Der Zentralkörper 16 ist würfelförmig gestaltet, so daß sich die einzelnen Grundkörper 1 orthogonal hiervon erstrecken. Es liegt auf der Hand, daß ein solcher Zentralkörper 16 nicht nur drei Grundkörper 1 aufnehmen kann, wie dies beim Ausführungsbeispiel der Fall ist, sondern eine beliebige Anzahl an Grundkörpern zwischen 1 und 5.

Um ein gleichzeitiges Befestigen sämtlicher Vierkantrohre 7 zu ermöglichen, ist der Zentralkörper 16 des Befestigungselementes mit einem allen Grundkörpern 1 gemeinsamen Betätigungsorgan 17 in Form eines Schraubeinsatzes 18 versehen. Der Schraubeinsatz 18 verfügt über eine zentrale Öffnung 19, durch die hindurch sich die in den gegenüberliegenden Grundkörper 1 angeordnete Schraube 3a erreichen läßt. Ferner verfügt der Schraubeinsatz 18 rückseitig über Keilflächen 20, an denen entsprechende Keilflächen 21 von Schrauben 3b anliegen, welche als Betätigungsmittel der orthogonal zu dem genannten Grundkörper 1 angeordneten Grundkörper dienen. Durch Eindrehen des mit der Öffnung 19 versehenen Schraubeinsatzes 18 lassen sich also gleichzeitig zwei einander gegenüberliegende Zugschrauben 3b anziehen und auf diese Weise die dort angeordneten Vierkantrohre 7 befestigen.

Im Rahmen des Ausführungsbeispiels ist stets auf ein Vierkantrohr 7 Bezug genommen. Selbstverständlich läßt sich die Erfindung ebenso an anderen Mehrkantrohren realisieren.

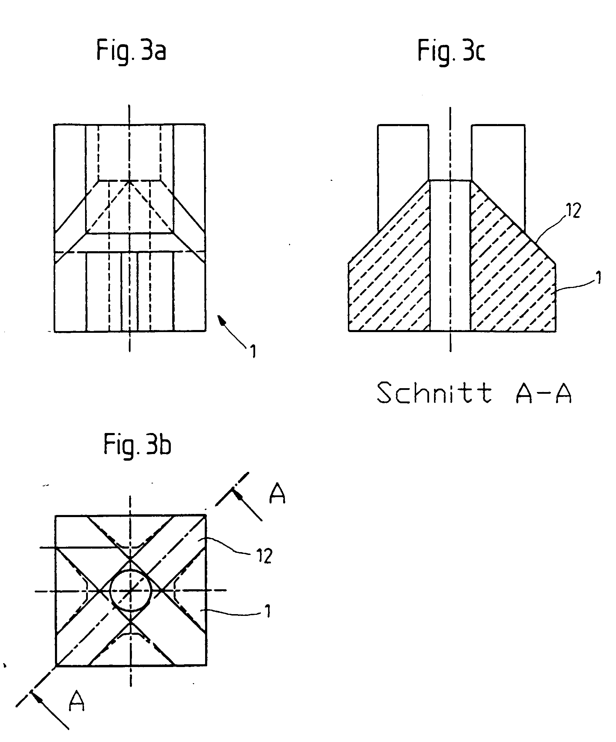

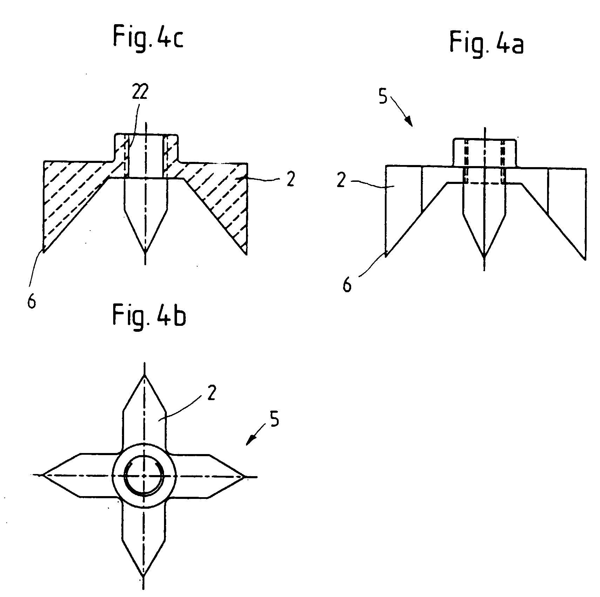

Bei den in Fig. 3a bis 3c und 4a bis 4c gezeigten Ausführungsbeispielen sind der Grundkörper und der Spreizkörper derart verbessert, daß zwischen den Spreizelementen und dem Mehrkantrohr keine punktartigen Berührungen, sondern möglichst großflächige Berührungen auftreten. Dadurch wird die Wahrscheinlichkeit von Ausbeulungen aufgrund sehr hoher Haltekräfte verringert, so daß insgesamt höhere Haltekräfte ermöglicht werden. Der in den Fig. 3a bis 3c gezeigte Grundkörper ist ein sehr einfach aufgebauter, im wesentlichen aus einem rechteckigen Profilstück gefertigter Körper, der eine Zentralbohrung zur Aufnahme eines Schraubeinsatzes sowie radial von der Mitte zu den Ecken verlaufende Stützflächen 12 aufweist. Die Stützflächen sind in etwa in einem Winkel von 45° gezeigt, wie die Schnittansicht in Fig. 3c zeigt, die den Schnitt entlang der Linie A-A gemäß Fig. 3b darstellt. Dieser mit geringem wirtschaftlichen Aufwand und einfach herstellbare Grundkörper 1 wird mit einem wie in den Fig. 4a bis 4c gezeigten Spreizkörper bestückt. Dieser ist propellerartig mit vier Spreizelementen versehen, die einen im wesentlichen dreieckigen Querschnitt aufweisen. Fig. 4a zeigt eine Seitenansicht des Spreizkörpers, Fig. 4b eine Draufsicht und Fig. 4c eine Schnittansicht. Die Neigung der Innenflächen der Spreizelemente 2 ist im gezeigten Ausführungsbeispiel größer als die Neigung der Stützflächen 12 am Grundkörper, beispielsweise 50°. Die radialen Außenkanten der Spreizelemente 2 sind gerade und die Spreizelemente 2 sind zu den radialen Außenkanten hin abgeschrägt, beispielsweise mit Abschrägungen von jeweils 30°. Im Zentrum weist der Spreizkörper 5 eine Gewindebohrung 22 auf. Der Spreizkörper 5 in den in den Fig. 4a bis 4c gezeigten Ausführungen ist ebenfalls äußerst einfach aufgebaut und macht darüber hinaus die Verwendung einer zusätzlichen Mutter für die Spannschraube überflüssig. Aufgrund der Geometrie der Spreizelemente 2 kommen diese nicht nur mit den Spreizspitzen 6 mit den Innenkanten des Mehrkantrohres in Verbindung, sondern über bestimmte Längen der radialen Außenkanten. Die Haltekräfte verteilen sich somit auf größere Flächen, so daß auch bei größeren Haltekräften Ausbeulungen vermieden werden können. Für das gezeigte Ausführungsbeispiel ist die besondere Ausgestaltung der Spreizelemente 2 in Abstimmung auf den gezeigten Grundkörper 1 wesentlich.

Während die gezeigten Ausführungsbeispiele jeweils Spreizelemente 2 mit Spreizspitzen 6 zeigen, sind auch säulenförmige Spreizelemente denkbar. Dabei können beispielsweise strangartige Spreizelemente mit einem im wesentlichen dreieckigen Querschnitt verwendet werden, die säulenartig von einer im wesentlichen dem Innenquerschnitt des Mehrkantrohres entsprechenden Grundplatte abstehen. Die Spreizelemente werden dann zu Spreizarmen, die sich ebenfalls über große Kantenbereiche an den Innenkanten des Mehrkantrohres abstützen.

### Bezugszeichenliste

- 1: Grundkörper
- 2: Spreizelement
- 3: Schraube
- 3a: Schraube
- 3b: Zugschraube
- 4: Vierkantmutter
- 5: Spreizkörper
- 6: Spreizspitzen
- 7: Vierkantrohr
- 8: Absatz
- 9: zentraler Bereich
- 10: Außenkante
- 11: Innenkante
- 12: Stützfläche
- 14: konstanter Abschnitt
- 15: Aussparung
- 16: Zentralkörper
- 17: Betätigungsorgan
- 18: Schraubeinsatz
- 19: Öffnung
- 20: Keilfläche
- 21: Keilfläche
- 22: Gewinde

- w₁: Neigungswinkel
- w₂: Neigungswinkel

## Patentansprüche

1. Vorrichtung zum lösbaren Verbinden von Mehrkantrohren, bestehend aus mindestens einem Mehrkantrohr, vorzugsweise Vierkantrohr, und aus einem Befestigungselement mit einem in das Ende des Mehrkantrohres einführbaren Grundkörper, an dem Spreizelemente angeordnet sind, die sich durch Betätigung von außen durch axiale Verschiebung relativ zum Grundkörper gegen Innenflächen des Mehrkantrohres spreizen lassen, um Grundkörper und Mehrkantrohr kraftschlüssig miteinander zu verbinden,
**dadurch gekennzeichnet,**
daß die Zahl der Spreizelemente (2) gleich ist der Zahl der Innenkanten (11) des Mehrkantrohres (7) und die Spreizelemente (2) so an dem Grundkörper (1) angeordnet sind, daß sie in gespreiztem Zustand ausschließlich in den jeweiligen Innenkanten (11) des Mehrkantrohres (7) anliegen, und daß die Spreizelemente (2) federnd ausgebildet sind und sich unter einem spitzen Winkel (w₁) geneigt zur Längsachse des Mehrkantrohres (7) erstrecken.

2. Befestigungselement nach Anspruch 1, dadurch gekennzeichnet, daß die Spreizelemente (2) in der Weise federnd ausgebildet sind, daß sie zur Erzeugung der Spreizbewegung ihren spitzen Neigungswinkel (w₁) vergrößern.

3. Befestigungselement nach Anspruch 1, dadurch gekennzeichnet, daß der Grundkörper (1) unter einem spitzen Winkel (w₂) zur Längsachse des Mehrkantrohres (7) geneigte Stützflächen (12) aufweist, an denen die Spreizelemente (2) während des Spreizens bzw. Entspreizens entlanggleiten.

4. Befestigungselement nach Anspruch 3, dadurch gekennzeichnet, daß in nicht gespreiztem Zustand der spitze Neigungswinkel (w₁) der Spreizelemente (2) geringer ist als der spitze Neigungswinkel (w₂) der Stützflächen (12), so daß die Spreizelemente (2) ausschließlich im Bereich der an ihren äußeren Enden ausgebildeten Spreizspitzen (6) an den Stützflächen (12) anliegen.

5. Befestigungselement nach einem der Ansprüche 1 bis 4, dadurch gekennzeichnet, daß sämtliche Spreizelemente (2) Bestandteil eines einstückig geformten, federnden Spreizkörpers (5) sind, der über einen zentralen Bereich (9) verfügt, an dem ein Betätigungsmittel (3, 3a, 3b) angreift, und von dem aus sich die einzelnen Spreizelemente (2) über stumpfwinklige Übergänge strahlenförmig nach außen erstrecken.

6. Befestigungselement nach Anspruch 5, dadurch gekennzeichnet, daß der Spreizkörper (5) als Stanzteil aus Metall ausgebildet ist, und die einzelnen Spreizelemente (2) durch stumpfwinklige Abbiegungen diese Stanzteils geformt sind.

7. Befestigungselement nach einem der Ansprüche 1 bis 6, dadurch gekennzeichnet, daß die Spreizelemten (2) einen bezüglich seiner Breite konstanten Abschnitt (14) aufweisen, an den sich V-förmig spitz auslaufende Spreizspitzen (6) anschließen.

8. Befestigungselement nach Anspruch 1, dadurch gekennzeichnet, daß die Betätigung der Spreizelemente (2) über ein zentral im Grundkörper angeordnetes Betätigungsmittel (3, 3a, 3b) erfolgt.

9. Befestigungselement nach Anspruch 1, dadurch gekennzeichnet, daß das Befestigungselement zusätzlich zu dem Grundkörper (1) über weitere, im wesentlichen identische Grundkörper (1) verfügt, wobei diese zur Befestigung weiterer Mehrkantrohre orthogonal zueinander an einem vorzugsweise würfelförmigen Zentralkörper (16) angeordnet sind.

10. Befestigungselement nach Anspruch 9, dadurch gekennzeichnet, daß der Zentralkörper (16) mit einem gemeinsamen Betätigungsorgan (17, 18) versehen ist, mit dem sich die Betätigungsmittel (3b) mehrerer Grundkörper (1) gleichzeitig betätigen lassen.

## Claims

1. Device for the releasable connection of polygonal tubes, comprising at least one polygonal tube, preferably a quadrilateral tube, and a fastening element with a basic body which can be introduced into the end of the polygonal tube and on which there are arranged spreader elements which, by actuation from the outside, can be spread against inner surfaces of the polygonal tube by way of axial displacement relative to the basic body, in order to connect the basic body and polygonal tube to one another in a frictionally locking manner, characterized in that the number of spreader elements (2) is equal to the number of inner edges (11) of the polygonal tube (7), and the spreader elements (2) are arranged on the basic body (1) such that, in the spread-out state, they butt exclusively against the respective inner edges (11) of the polygonal tube (7), and in that the spreader elements (2) are designed in a resilient manner and are inclined at an acute angle (w₁) with respect to the longitudinal axis of the polygonal tube (7).

2. Fastening element according to Claim 1, characterized in that the spreader elements (2) are designed in a resilient manner such that they increase their acute angle of inclination (w₁) in order to produce the spreading movement.

3. Fastening element according to Claim 1, characterized in that the basic body (1) has supporting surfaces (12) which are inclined at an acute angle (w₂) with respect to the longitudinal axis of the polygonal tube (7) and along which the spreader elements (2) slide as they are spread out and as the spread-out state is cancelled.

4. Fastening element according to Claim 3, characterized in that, in the non-spread out state, the acute angle of inclination (w₁) of the spreader elements (2) is smaller than the acute angle of inclination (w₂) of the supporting surfaces (12), with the result that the spreader elements (2) butt against the supporting surfaces (12) exclusively in the region of the spreading tips (6) formed at their outer edges.

5. Fastening element according to one of Claims 1 to 4, characterized in that all the spreader elements (2) form a constituent part of a single-piece, resilient spreader body (5) which has a central region (9) on which an actuating means (3, 3a, 3b) acts and from which the individual spreader elements (2) extend radially outwards via obtuse-angled transitions.

6. Fastening element according to Claim 5, characterized in that the spreader body (5) is designed as a punched metal component, and the individual spreader elements (2) are formed by obtuse-angled bent sections of said punched component.

7. Fastening element according to one of Claims 1 to 6, characterized in that the spreader elements (2) have a section (14) which is constant in terms of width and which is adjoined by spreading tips (6) which taper in the form of a V.

8. Fastening element according to Claim 1, characterized in that the spreader elements (2) are actuated via an actuating means (3, 3a, 3b) arranged centrally in the basic body.

9. Fastening element according to Claim 1, characterized in that, in addition to the basic body (1), the fastening element has other, essentially identical basic bodies (1), these being arranged on a preferably cube-shaped central body (16) for the purpose of fastening further polygonal tubes orthogonally with respect to one another.

10. Fastening element according to Claim 9, characterized in that the central body (16) is provided with a common actuating member (17, 18) by which the actuating means (3b) of a plurality of basic bodies (1) can be actuated simultaneously.

## Revendications

1. Dispositif de fixation pour relier de manière amovible des tubes polygonaux, se composant d'au moins un tube polygonal, de préférence à profil rectangulaire, et d'un élément de fixation avec un corps principal insérable dans l'extrémité du tube polygonal, sur lequel sont disposés des éléments écarteurs qui s'écartent par actionnement de l'extérieur grâce à un décalage axial par rapport au corps principal contre les surfaces intérieures du tube polygonal afin de relier entre eux par adhérence le corps principal et le tube polygonal caractérisé en ce que
le nombre d'éléments écarteurs (2) est le même que le nombre des bords intérieurs (11) du tube polygonal (7) et que les éléments écarteurs (2) sont disposés sur le corps principal (1) de manière que, lorsqu'ils sont écartés, ils reposent uniquement sur les bords intérieurs respectifs (11) du tube polygonal (7) et que les éléments écarteurs (2) sont configurés comme des ressorts et s'évasent en formant un angle aigu (w₁) incliné par rapport à l'axe longitudinal du tube polygonal (7).

2. Elément de fixation suivant la revendication 1, caractérisé en ce que les éléments de fixation (2) sont configurés comme des ressorts de manière qu'ils augmentent leur angle aigu d'inclinaison (w₁) afin de générer un mouvement d'écartement.

3. Elément de fixation suivant la revendication 1, caractérisé en ce que le corps principal (1) présente, sous un angle aigu (W₂), par rapport à l'axe longitudinal du tube polygonal (7) des surfaces d'appui inclinées (12) le long lesquelles les éléments écarteurs (2) glissent pendant l'écartement ou le resserrement.

4. Elément de fixation suivant la revendication 3, caractérisé en ce que lorsqu'il n'est pas en position écartée, l'angle aigu d'inclinaison (wl) des éléments écarteurs (2) est plus petit que l'angle aigu d'inclinaison (w2) des surfaces d'appui (12), de manière que les éléments de fixation (2) reposent sur les surfaces d'appui (12) exclusivement dans la zone des pointes d'écartement (6) formées à leurs extrémités extérieures.

5. Elément de fixation suivant l'une des revendications 1 à 4, caractérisé en ce que tous les éléments écarteurs (2) font partie d'un corps écarteur (5) élastique monobloc qui présente une zone centrale (9) sur laquelle un élément d'actionnement (3, 3a, 3b) est en prise, et à partir duquel les différents éléments écarteurs (2) s'écartent vers l'extérieur en faisceau par le biais de transitions à angle obtus.

6. Elément de fixation suivant la revendication 5, caractérisé en ce que l'élément écarteur (2) se présente sous forme de pièce estampée en métal et que les différents éléments écarteurs (2) sont formés par des pliures à angle obtus de cette pièce estampée.

7. Elément de fixation suivant l'une des revendications 1 à 6, caractérisé en ce que les éléments écarteurs (2) présentent une section constante par rapport à sa largeur (14), sur laquelle se raccordent les pointes d'écartement (6) se terminant en forme de pointe en V.

8. Elément de fixation suivant la revendication 1, caractérisé en ce que l'actionnement des éléments de fixation (2) se fait par un moyen d'actionnement (3, 3a, 3b) disposé au centre du corps principal.

9. Elément de fixation suivant la revendication 1, caractérisé en ce que l'élément de fixation dispose en complément du corps principal (1) d'autres corps principaux (1) essentiellement identiques, ces derniers étant disposés orthogonalement les uns par rapport aux autres sur un corps central (16) de préférence de forme cubique, pour la fixation d'autres tubes polygonaux.

10. Elément de fixation suivant la revendication 9, caractérisé en ce que le corps central (16) est muni d'un organe d'actionnement commun (17, 18) permettant d'actionner simultanément les moyens d'actionnement (3b) de plusieurs corps principaux (1).
